# EUROPEAN PATENT SPECIFICATION

(11) **EP 2 689 999 B1**
(45) Date of publication and mention of the grant of the patent: **10.01.2018**
(21) Application number: 13177204.8
(22) Date of filing: 19.07.2013
(51) Int. Cl.: B62M 6/85, B62M 6/90, B60L 11/00, B60L 8/00

(54) **A motorized vehicle having at least two wheels, such as a bicycle**
Ein motorisiertes Fahrzeug mit wenigstens zwei Rädern, wie zum Beispiel ein Fahrrad
Un véhicule motorisé ayant au moins deux roues, comme une bicyclette

(30) Priority: 26.07.2012 IT GE20120075
(43) Date of publication of application: 29.01.2014
(73) Proprietor: FIVE FABBRICA ITALIANA VEICOLI ELETTRICI SRL, 40132 Bologna (IT)
(72) Inventor: Giatti, Giorgio, 40068 San Lazzaro Di Savena (BO) (IT); Peschetola, Roberto, 40133 Bologna (IT)
(74) Representative: Karaghiosoff, Giorgio Alessandro

(56) References cited:
- DE-A1-102008 014 495
- DE-A1-102009 029 658
- DE-U1-202009 016 921
- KR-A- 20120 079 305
- US-A1- 2009 082 914
- US-A1- 2009 277 699
- US-A1- 2011 011 657

## Description

The present invention relates to a motorized vehicle having at least two wheels, such as a bicycle or the like, according to the preamble of claim 1.

As used herein, the term manual drive means intends to designate members operated by a physical activity exerted by the human body.

The fabrication and use of two-wheeled electric vehicles, such as bicycles and scooters are currently discussed, are currently a matter of interest, due to the advantages provided by electric vehicles in various respects.

First, they provide an undoubted economic advantage, as they do not consume fuel, and their use is not affected by the continuously rising cost of petroleum.

In addition to its cost effects, the possibility of avoiding the use of oil provides apparent environmental advantages, as electric vehicles do not pollute and hence do not contribute to the detrimental aspects deriving from typical engine combustions.

Particularly referring to electric bicycles, i.e. the vehicle preferably discussed by the present invention, an additional advantage should be noted, i.e. the advantage of easy circulation in the city traffic, and avoid congestion, as well as the possibility of parking the vehicle, i.e. the bicycle anywhere, due to its small size.

A possible example is disclosed in the document US2009/082914 in which an electric motor and conversion system converts a manually powered vehicle such as a bicycle to an electric vehicle. The electric motor includes a direct current power source, a rotor with two sides and two series of permanent magnets alternating in polarity, two stators on opposing sides of the rotor where each stator has a series of winding coils, magnet position identifiers, and a control system. The rotor and stators are generally annular with a gap that enables the motor to be installed on the rear axle of a bicycle near the rear wheel. Preferably, the number of magnets on the rotor does not equal the number of winding coils on the stators. The control system includes a sensor that records input from the magnet position identifiers and a microcontroller to process the input and to individually control winding drivers to precisely regulate the operation of the motor in response to the input. The magnet position identifiers preferably are a series of apertures on the rotor through which signals pass, such as light passing from a light source on one stator to the sensor. A connector attaches the rotor to the rear axle so that when the rotor rotates, the rear wheel also rotates. The conversion system can also include a removable throttle and electric cables for electrically connecting all of the components. The control system and microcontroller can additionally detect signals from the throttle and adjust the speed of the rotor accordingly.

The increased use of electric vehicles has motivated those skilled in the art to concentrate the developments on the main advantage thereof, i.e. the electric motor-powering battery.

The batteries of vehicles having a completely electric operation are the only supply of the motor that powers them, and hence energy absorption should be limited in the vehicle to ensure an acceptable battery life.

This need is particularly felt in bicycles that are required to have a small, and hence low-charge battery for weight reduction purposes.

Therefore, the need arises for an electric vehicle that has a lower power consumption without affecting the performance of its electric motor, and this need will drive current and future developments in the field of electric vehicles, particularly electric bicycles.

The present invention fulfills the above objects by providing a vehicle as described above and according to the characterizing part of claim 1.

Since the performance of the electric motor has to be constant to provide an acceptable power for vehicle propulsion, the present invention limits power consumption by causing the control unit to turn off when no control is requested therefrom on motor operation.

In prior art vehicles, even when the actuation of the electric motor is not requested, control units carry out certain control operations as they wait for inputs for regulating the operation of the motor.

These control operations are unnecessary and require current absorption, and particularly the operation of the control unit's processor is unnecessary, which consumes most of the power absorbed by the control unit.

Therefore, according to a variant embodiment, the control unit comprises a processing unit connected to one or more storage units and communicating with processor means for executing a logic program, whose execution causes certain tasks to be accomplished, including the task of turning on/off the control unit.

When the operation of the control unit is not required, the on/off feature will be the only operating feature, which will dramatically limit power consumption by the control unit. Therefore, the on/off feature will generate signals to turn on and/or off the control unit according to the speed parameters of the vehicle of the present invention.

In one improvement, the execution of the logic program causes the control unit to carry out the steps of:
a) detecting the speed parameters of the vehicle,
b) turning on/off the control unit,
c) generating control signals for regulating the operation of the electric motor.

The step of detecting the speed parameters of the vehicle allows the control unit to determine whether the electric motor has to be turned on or this is not required.

In the particular case of bicycles, for example, downhill riding is a typical example in which the electric motor is not required to be on for propulsion of the bicycle, whereby as the control unit detects this condition, it turns off, and accordingly turns off the electric motor, whereby the only operating feature left is the on/off feature.

As soon as downhill riding ends, the on/off feature receives an input that causes the control unit and hence the electric motor, to be started again, to ensure the required power.

Generally, in a stand-by state, i.e. with the processor on, but with no propulsion provided by the electric motor, prior art control units have about 800 milliampere absorption, whereas the control unit of the vehicle of the present invention, with the on/off feature only operating, has about 70 milliampere consumption.

Various methods and devices for detecting the speed parameters of the vehicle are provided, and all of them are contemplated by the present invention.

Nevertheless, speed parameters are preferably detected by sensing pedal operation using a sensor.

Referring to the previous example, when downhill riding ends, the user starts to pedal, the sensor detects this movement and sends a signal to the turn on/off feature, which turns on the control unit, thereby allowing propulsion energy to be provided by the electric motor.

As an alternative to the above, speed parameters may be detected by sensing the operation of the braking members using a sensor placed thereon.

The two detection modes as described above may be also provided in combination, thereby increasing the efficiency of the on/off feature for turning on/off the central unit.

It shall be further noted that repeated on/off operations on the control unit and accordingly on the motor are only aimed at reducing power absorption by the motor, and do not affect driving comfort in any manner.

The present invention also relates to a method that claims the above described steps, namely:
a) detecting the speed parameters of said vehicle,
b) turning on/off the control unit,
c) generating control signals for regulating the operation of the electric motor.

The step a) may be obviously carried out according to the two above described modes, i.e. pedaling or braking detection.

Since the object and main advantage of the present invention is to reduce power consumption, the control unit is preferably turned on/off instantaneously.

This is because the shorter the response time of the on/off feature, the lower the current absorption.

The electric motor that is typically used in electric vehicles is a brushless motor, which is mainly preferred for its low inertia.

Two methods generally exist for controlling the brushless motor, i.e. trapezoidal and sinusoidal control, the former involving a simpler hardware architecture than the latter, but achieving lower performance and accuracy.

Preferably, the electric motor is actuated by the control unit by a trapezoidal waveform signal that consists of a broken line approximating a sinusoid.

Thus, the hardware architecture of the trapezoidal system provides a waveform that approximates the sine curve.

High power consumption is a common problem of prior art vehicles, which considerably decreases the motor battery life.

In addition to reducing power consumption, a possible solution consists in providing efficient battery charging devices, that may be used during use of the vehicle.

Therefore, according to one embodiment, the vehicle of the present invention involves the use of an energy storage and generation source consisting of a rechargeable battery, that is supported by a support element comprising a battery housing compartment, delimited by side walls at its sides, by a bottom wall at its bottom and by a cover wall at its top.

The cover wall is at least partially covered by a photovoltaic element, which is placed on the top face thereof, and the housing compartment has circuits for connecting the battery to the control unit, as well as battery recharging circuits.

As shown in greater detail through the description of a few exemplary embodiments, the support element may be placed above the rear wheel, such that the cover wall may be alternatively used for battery recharge or as luggage rack.

According to a variant embodiment, the cover wall has at least one lateral photovoltaic element which is coupled to a peripheral edge of the cover wall, such that the lateral photovoltaic element can switch from an open state to a closed state, in which closed state it lies over the cover wall.

While such improvement can increase the photovoltaic area to increase power generation, it does not increase the dimensions of the support element, as the lateral photovoltaic element lies over the cover wall.

The lateral photovoltaic element preferably has the same size as the cover wall, and any number of lateral photovoltaic elements can be provided, possibly hinged together, to allow all lateral photovoltaic elements to lie on the cover wall, like a leaflet.

According to a preferred variant embodiment, two lateral photovoltaic elements are provided.

The cover wall has a rectangular shape and a lateral photovoltaic element is coupled to each long peripheral edge, such that each lateral photovoltaic element can switch from an open state to a closed state, in which closed state the cover wall and each of the two lateral photovoltaic elements are in superimposed relation.

Preferably, the two lateral photovoltaic elements are congruent in size with the cover wall.

These and other features and advantages of the invention will be more apparent from the following description of a few embodiments shown in the accompanying drawings, in which:
Fig. 1 is a view of the vehicle of the present invention;
Fig. 2 is a block diagram of the operation principle of the motorized vehicle of the present invention, with particular reference to the control unit;
Figure 3 is a flow chart showing the steps of the method of the present invention;
Fig. 4 shows the waveform of the signal for controlling the electric motor according to a possible embodiment;
Figs. 5a and 5b show a detail of the vehicle of the present invention;
Fig. 6 shows a detail of an additional exemplary embodiment of the vehicle of the present invention.

It shall be noted that the figures show a preferred embodiment of the vehicle, and this embodiment shall be intended by way of illustration and without limitation to the inventive concept of the present invention, which consists in improving the efficiency of electric motor-powered vehicles, thereby limiting current consumption and improving battery performances.

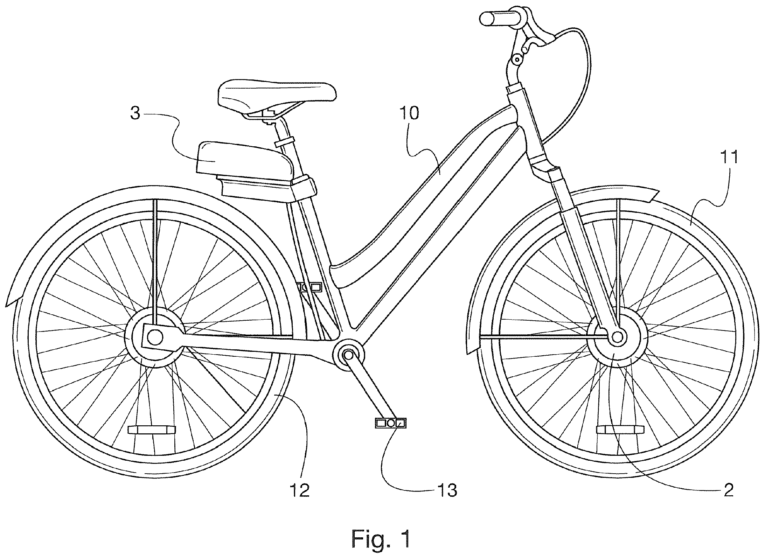

Particularly referring to the figures, Figure 1 is a lateral view of the vehicle of the present invention.

The vehicle has all the features of a common electric power-assisted bicycle, and comprises a frame 10, two wheels, i.e. a front wheel 11 and a rear wheel 12 and manual drive members, i.e. pedals 13.

The pedals 13 transfer the movement imparted by the user to the rear wheel 12 through the transmission means 132, which may consist of prior art common transmission.

Pedaling is assisted by an electric motor 2, which is preferably located within the hub of the front wheel 11 and transfers its motion to the front wheel, thereby moving the bicycle.

Alternatively to or in combination with the above, the electric motor 2 may be also placed in the hub of the rear wheel and/or in the crank block, at the center thereof.

The electric motor 2 is powered by an energy storage and generation source 3, which is electrically connected to the electric motor 2.

Particularly, the electric motor 2 is connected to the battery 3 through a control unit 21, which regulates the operation of the electric motor 2.

The control unit 21 turns on/off according to the speed parameters of the bicycle.

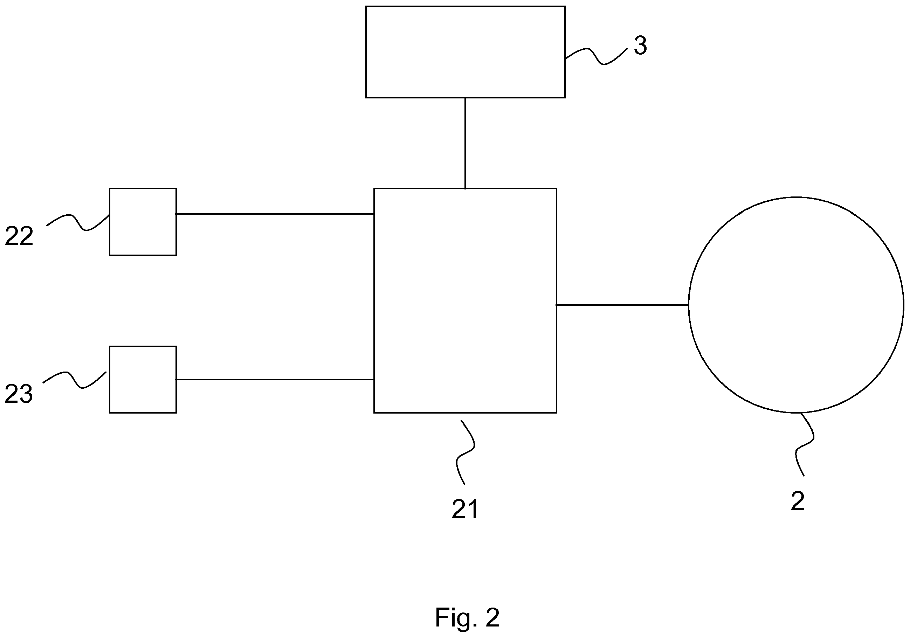

Figure 2 is a block diagram of the operation principle of the motorized vehicle of the present invention, with particular reference to the control unit.

Preferably, the control unit 23 comprises a processing unit connected to one or more storage units and communicating with processor means for executing a logic program, whose execution causes certain tasks to be accomplished, including the task of turning on/off the control unit 21.

The control unit 21 communicates with the motor 2, i.e. generates signals for turning on the electric motor 2 and receives information from the electric motor 2 concerning its operation.

The control unit 21 is further connected to the battery 3 for the battery 3 to supply power to the control unit 31 for the electric motor 2 to be also powered through such control unit 21.

The control unit 21 turns on/off according to the speed parameters of the bicycle, and particularly detects the speed parameters of the bicycle and generates control signals for regulating the operation of the electric motor 2.

The speed parameters of the bicycle are detected using sensors, that may be of any type.

Nevertheless, the control unit 21 receives speed parameter information through a sensor 22 that is designed to detect operation of the pedals 13 or the effort applied thereon.

For instance, such sensor 22 may be composed of two magnetically interacting parts, i.e. a first part on the pedal 13 and a second part on the frame 10 level with the pedal 13, such that the second part senses the passage of the first part at each turn of the pedal 13.

According to an improvement of the present invention, speed parameters are detected by sensing the operation of the braking members, i.e. using a sensor 23 placed on the brake levers of the bicycle, which transmits information to the control unit 21 each time that the brake is applied.

The sensor 23 may be preferably formed as described concerning the sensor 22.

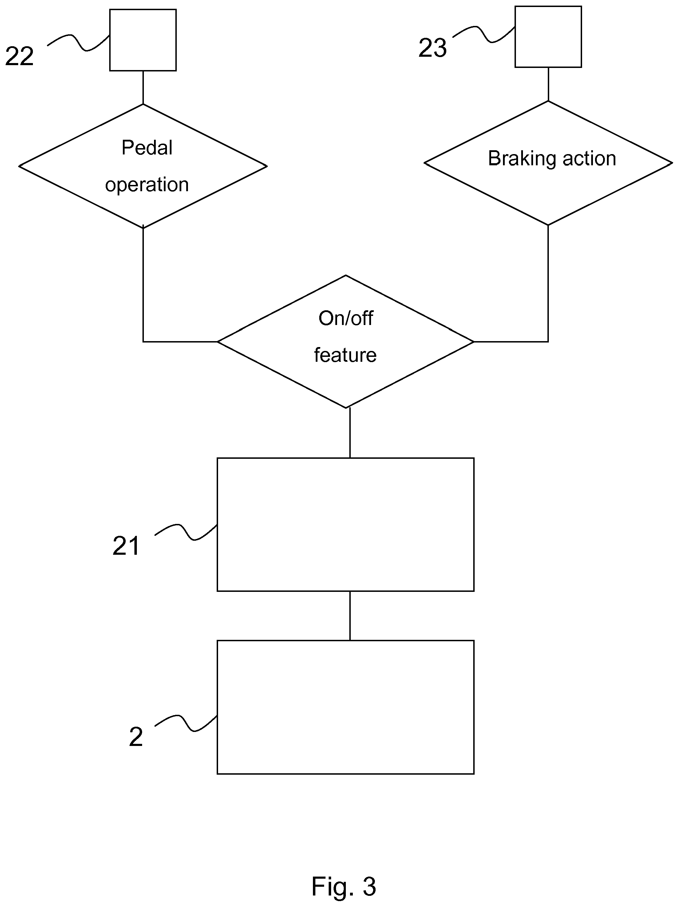

The block diagram of Figure 2 is further explained in Figure 3, which shows a flow chart of the steps of the method describing the operation of the vehicle of the present invention, particularly referring to the feature for turning on/off the control unit 21.

The control unit 21 receives various inputs, consisting of signals generating by the detecting sensors 22 and 23.

In one improvement, an effort sensor detects the torque applied by the user to the pedals.

Here, the effort sensor generates a signal, according to which the control unit controls power supply to the motor.

From the on-state of the control unit 21, if the sensor 22 indicates that the pedal 13 is moving, then the control unit 21 remains on.

As soon as the sensor 22 detects that the pedals 13 have stopped moving, then the sensor sends such information to the control signal 21 which turns immediately off, and only leaves the on/off feature in operation, such that it can receive signals from the sensor 22 and, if the pedal is 13 is moved, it can turn on the control unit 21 and, accordingly, the electric motor 2 again.

The sensor 23 carries out an identical process.

From the on-state of the control unit 21, if the sensor 23 does not indicate a braking action, then the control unit 21 remains on.

As soon as the sensor 23 detects a braking action, the sensor sends such information to the control unit 21 which turns immediately off, and only leaves the on/off feature in operation, such that it can receive signals from the sensor 23 and, if the braking action is stopped, it can turn on the control unit 21 and, accordingly, the electric motor 2 again.

The on/off feature may have any response time, but it is preferably set to have a minimum response time.

Furthermore, the information from the sensor 22 and the information of the sensor 23 may be provided in combination and processed by the processing unit of the control unit 21.

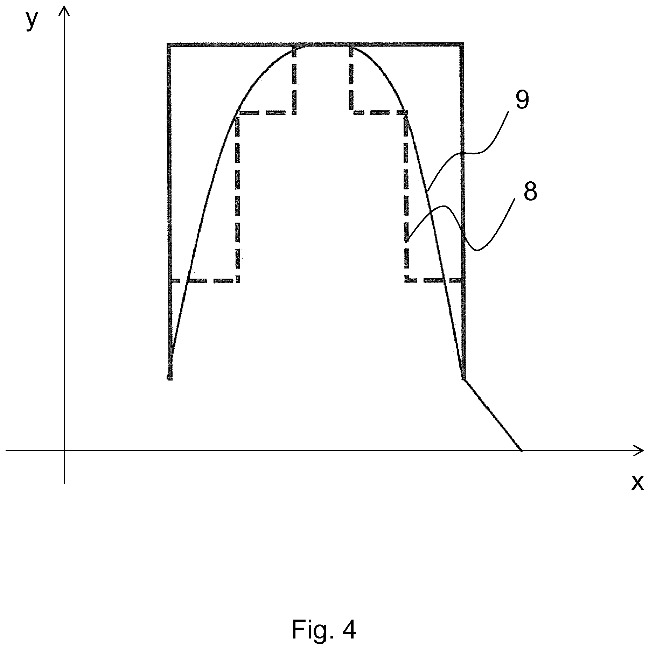

Figure 4 shows the waveform of the signal for controlling the electric motor of the vehicle of the present invention.

In the embodiment as shown in Figure 4, the waveform that is used is a broken line consisting of the dashed line.

The dashed line 8s is composed of segments that are orthogonal to one another and parallel and/or perpendicular to the x and y axes, generally designating time and current strength.

The broken line 8 approximates the curve of a half-period of a sine wave 9.

By obtaining the above described waveform from the broken line 8, the hardware architecture of the trapezoidal control system may be used, and its efficiency may be improved, by approximation of the sinusoidal control method.

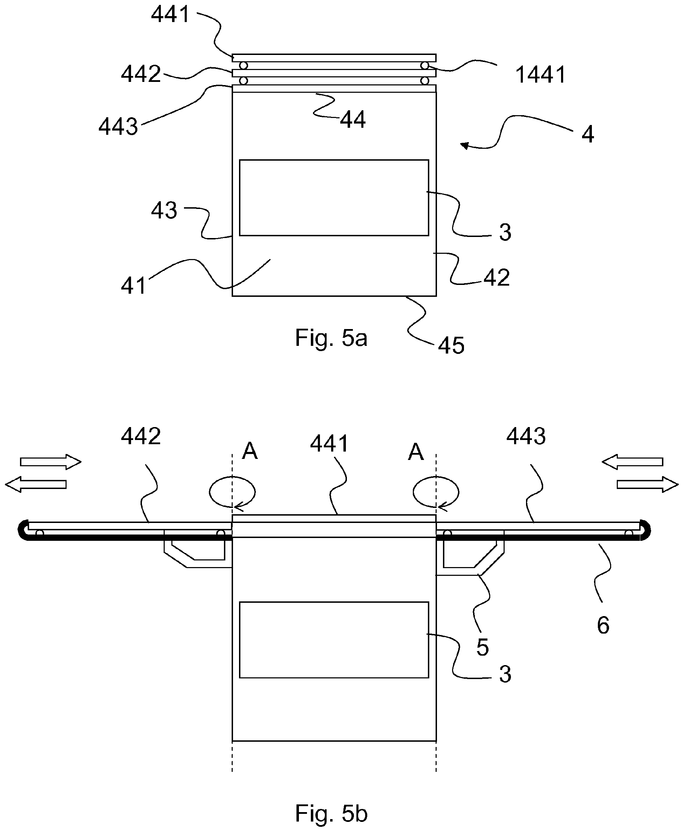

Figures 5a and 5b show a detail of the vehicle of the present invention concerning the energy storage and generation source 3. According to this variant embodiment, the energy storage and generation source consists of a rechargeable battery 3 supported by a support element 4 comprising a housing compartment 41 for the battery 3, which is bounded by side walls 42 and 43 at its sides, by a bottom wall 45 at its bottom and by a cover wall 44 at its top.

Figures 5a and 5b shows sections of such support element 4 along a plane perpendicular to the longitudinal plane thereof.

The support element 4 is preferably placed above the rear wheel 12, at the luggage rack, such that it may both act as a power supply and as a luggage rack.

The cover wall 44 is at least partially covered by a photovoltaic element 441, which is placed on the top face of the cover wall 44.

The housing compartment 41 has circuits for connecting the battery 3 to the control unit 21, as well as circuits for recharging the battery 3.

Then, the energy captured by the photovoltaic element 441 is used to recharge the battery 3, which may be removable or integrated in the housing compartment 41.

If the battery is removable, at least one connector may be provided, which is composed of a first part integral with the housing compartment 41, and cooperating with a second part integral with the battery 3, such that the battery 3 may be connected with the remaining parts of the bicycle, including the photovoltaic element 441.

Particularly, Figures 5a and 5b show a possible embodiment of the support element 4.

In this embodiment, the cover wall 44 is formed of or entirely covered by a rectangular photovoltaic element 441, along whose long peripheral edges two lateral photovoltaic elements 442 and 443 are coupled. Therefore, the lateral photovoltaic elements 442 and 443 translate from an open state to a closed state, in which closed state, as shown in Figure 5a, the two lateral photovoltaic elements 442 and 443 and the photovoltaic element 441 are in superimposed relation.

In this case the lateral photovoltaic elements 442 and 443 can be moved to the open state by a translational motion perpendicular to the longer peripheral edges of the cover wall 44.

In an alternative variant embodiment, each of the lateral photovoltaic elements 442 and 443 has one end pivoted to the cover wall 44 and can be moved to the open state by a rotary motion perpendicular to the longer peripheral edges of the cover wall 44.

The photovoltaic elements 441, 442 and 443 are preferably congruent in size and are shown in the closed state in Figure 5a, and in the open state in Figure 5b.

Particularly, the two lateral photovoltaic elements 442 and 443 translate perpendicular to the longitudinal direction of the photovoltaic element 441 and in opposite directions from a closed position, as shown in Figure 5a, to an open position, as shown in Figure 5b.

Here, translation means may be provided, such as wheels 1441, which allow the photovoltaic elements to slide one on the other, along special slide guides on the faces of the photovoltaic elements.

The slide guides may have abutment members therein, which stop each photovoltaic element at its limit stop position, in both the open and closed states.

To avoid malfunctioning in such translational movement, the wheels 1441 may be formed of an inert material, such as Teflon or the like.

Also, in the open state and particularly referring to Figure 5b, the lateral photovoltaic elements 442 and 443 are supported by support members 5 that are fixed to the side walls of the support element 4.

Furthermore, in a variant embodiment, the support members 5 are hinged to the side walls of the support element 4, to be able to pivot about the axis A, which allows reduction of the dimensions of the element itself in the closed state.

Finally, protection elements 6 may be provided, such as sheaths or the like, for the passage of connecting cables, for connecting each lateral photovoltaic element 442 and 443 to the circuits in the housing compartment 41.

The housing compartment 41 may be also designed to contain more than one battery 3, such that the first battery may be used to supply power to the electric motor, and the other/s may be backup batteries, such that while the main battery operates the other are recharged.

In one embodiment of the support element 4, each lateral photovoltaic element 442 and 443 may be designed to be hinged to the photovoltaic element 441, to pivot from the closed state to the open state.

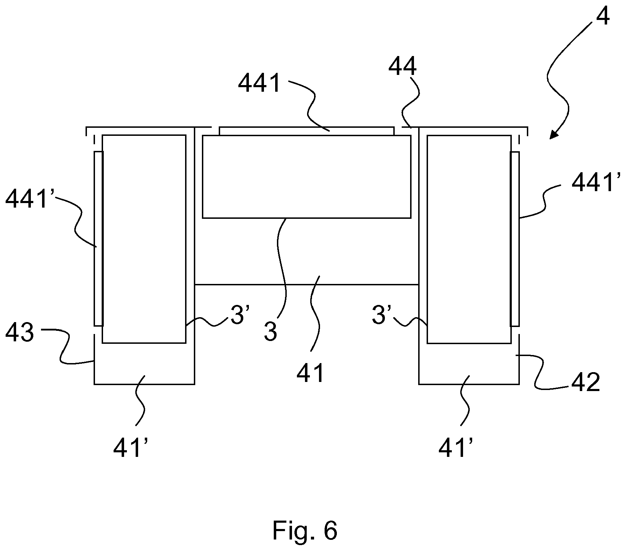

In a further embodiment, as shown in Figure 6, concerning a bicycle or the like, in which the support element 4 is shown as a sectional view along a plane perpendicular to the longitudinal axis of the vehicle, this support element comprises a housing compartment 41 for a battery 3, which is located at the center and has two lateral housing compartments 41' at both sides, for housing two additional batteries 3'.

Due to its conformation, the support element is advantageously placed on a rear luggage rack.

The batteries 3 and 3' have a photovoltaic element 441 or 441' at one side, and are adapted to be inserted in said housing comportments 41 and 41', such that the photovoltaic element 441 or 441' is oriented outwards, proximate to corresponding apertures formed in the side walls 43 and 42 or in the cover wall 44, to be exposed to the sun light.

Particularly, the central battery 3 has its photovoltaic element 441 located at an aperture formed in the cover wall 33 and the batteries 3' placed at its sides have their photovoltaic elements 441' located at apertures formed in the side wall 43 and the side wall 42 respectively.

Said photovoltaic elements 441 and 441' are connected to the batteries 3 and 3' for recharging them.

At least one battery in at least one housing compartment is used for supplying power to the motor and at least one battery in at least one housing compartment is used to be recharged by the solar elements or by further energy recovery devices.

Advantageously, the lateral housing compartments 41' contain batteries 3' that are used for supplying power to the motor, whereas the central housing 41 contains the battery to be recharged.

In an alternative configuration, the lateral housing compartments 41' contain batteries 3' that are used to be recharged, whereas the central housing 41 contains the battery 3 that is used for supplying power to the motor.

In one improvement, the housing compartments 41' are designed to be pivoted from a position in which the side walls 42 and 43 lie on vertical planes to a position in which they lie on a horizontal plane.

## Claims

1. A motorized vehicle having at least two wheels (11, 12), such as a bicycle or the like, comprising at least one electric motor (2) powered by an energy storage and generation source, such as a battery (3) or the like, said at least one motor (2) driving at least one of said two wheels (11).
manual drive means, such as pedals (13) or the like, being provided for transferring motion to at least one of said two wheels (12) through transmission means
said at least one electric motor (2) being connected to said energy storage and generation source (3) through a control unit (21), said control unit (21) regulating the operation of said electric motor (2) during normal fault free operation,
**characterized in that**
said control unit (21) turns on and/or off according to the speed parameters of said vehicle.

2. A motorized vehicle as claimed in claim 1, wherein said control unit (21) comprises a processing unit connected to one or more storage units and with processor means for executing a logic program,
the execution of said logic program involving the accomplishment of certain tasks, including turning on and/or off said control unit.

3. A vehicle as claimed in claim 2, wherein the execution of said logic program causes said control unit (21) to carry out the steps of:
a) detecting the speed parameters of said vehicle,
b) turning on and/or off the control unit (21),
c) generating control signals for regulating the operation of said electric motor (2).

4. A vehicle as claimed in one or more of the preceding claims, **characterized in that** the speed parameters are detected by sensing the actuation of said pedals (13),
the actuation of said pedals (13) being sensed by at least one sensor (22).

5. A vehicle as claimed in one or more of the preceding claims, wherein brake members are provided, and wherein the speed parameters are detected by sensing the actuation of said brake members, the actuation of said brake members being sensed by at least one sensor (23).

6. A vehicle as claimed in one or more of the preceding claims, wherein the power signal to said electric motor (2) has a trapezoidal waveform, consisting of a broken line approximating a sinusoid.

7. A vehicle as claimed in one or more of the preceding claims, wherein said energy storage and generation source consists of a rechargeable battery (3),
said battery (3) being supported by a support element (4) comprising a housing compartment (41) for said battery (3), which is bounded by side walls (42, 43) at its sides, by a bottom wall (45) at its bottom and by a cover wall (44) at its top,
said cover wall (44) consisting or being at least partially covered by a photovoltaic element (441), which is placed on the top face of said cover wall (44),
said housing compartment (41) having connection circuits for connecting said battery (3) to said control unit (21), as well as circuits for charging said battery (3).

8. A vehicle as claimed in claim 7, wherein said cover wall (44) has at least one lateral photovoltaic element (442, 443) which is coupled to a peripheral edge of said cover wall (44), such that said lateral photovoltaic element (442, 443) can be moved from an open state to a closed state, in which closed state said lateral photovoltaic element (442, 443) lies under said photovoltaic element (441).

9. A vehicle as claimed in claim 8, wherein said cover wall (44) has a rectangular shape,
a lateral photovoltaic element (442, 443) being coupled to each long peripheral edge, such that each lateral photovoltaic element (442, 443) can be moved from an open state to a closed state, in which closed state each of said two lateral photovoltaic elements (442, 443) are in overlapping relation to each other and lie under said photovoltaic element (441),
said two lateral photovoltaic elements (442, 443) being congruent in size with said cover wall.

10. A vehicle as claimed in claim 9, wherein said lateral photovoltaic elements (442, 443) can be moved to the open state by a translational motion perpendicular to said longer peripheral edges of said cover wall (44).

11. A vehicle as claimed in claim 9, wherein each of said lateral photovoltaic elements (442, 443) has one end pivoted to said cover wall (44) and can be moved to the open state by a rotary motion perpendicular to said longer peripheral edges of said cover wall (44).

12. A vehicle as claimed in one or more of the preceding claims, wherein at least one additional housing compartment 41' is provided for at least one additional battery 3', at least one battery in at least one housing compartment being used for powering the motor and at least one additional battery in at least one additional housing compartment being used for recharging purposes.

13. A method of controlling energy management in a motor driven device (2) such as a bicycle or the like, said bicycle comprising at least one electric motor (2) powered by an energy storage and generation source, such as a battery (3) or the like, said at least one motor (2) driving at least one of said two wheels (11),
manual drive means, such as pedals (13) or the like, being provided for transferring motion to at least one of said two wheels (12) through transmission means
and said at least one electric motor (2) being connected to said energy storage and generation source (3) through a control unit (21), said control unit (21) regulating the operation of said electric motor (2) during normal fault free operation,,
**characterized in that** said method comprises the steps of:
a) detecting the speed parameters of said vehicle,
b) turning on and/or off the control unit (21),
c) generating control signals for regulating the operation of said electric motor (2),
wherein said control unit (21) turns on if actuation of said pedals (13) is detected.

14. A method as claimed in claim 13, wherein said control unit (21) turns on if a braking action is sensed.

15. A method as claimed in one or more of the preceding claims from 13 and 14, wherein said control unit is turned on and/or off instantaneously.

## Patentansprüche

1. Motorisiertes Fahrzeug mit wenigstens zwei Rädern (11, 12), wie ein Fahrrad oder dergleichen, umfassend wenigstens einen von einer Energiespeicher- und Energieerzeugungsquelle, wie z. B. eine Batterie (3) oder dergleichen, gespeisten Elektromotor (2), wobei der mindestens eine Motor (2) mindestens eines der beiden Räder (11) antreibt,
manuelle Antriebsmittel, wie Pedale (13) oder dergleichen, die zur Übertragung einer Bewegung auf zumindest eines der beiden Räder (12) durch Übertragungsmittel vorgesehen sind,
wobei der mindestens eine Motor (2) durch eine Steuereinheit (21) mit der Energiespeicher- und Energieerzeugungsquelle (3) verbunden ist, und die Steuereinheit (21) die Funktion des Elektromotors (2) im normalen störungsfreien Betrieb regelt,
**dadurch gekennzeichnet, dass**
die Steuereinheit (21) sich entsprechend den Geschwindigkeitsparametern des Fahrzeugs ein- und/oder ausschaltet.

2. Motorisiertes Fahrzeug nach Anspruch 1, wobei die Steuereinheit (21) eine mit einer oder mehreren Speichereinheiten und mit Prozessormitteln zur Ausführung eines logischen Programms verbundene Verarbeitungseinheit umfasst, und die Ausführung dieses logischen Programms die Erfüllung bestimmter Aufgaben, einschließlich das Ein-und/oder Ausschalten der Steuereinheit, beinhaltet.

3. Fahrzeug nach Anspruch 2, wobei die Ausführung des logischen Programms die Steuereinheit (21) dazu veranlasst, folgende Schritte auszuführen:
a) Erfassen der Geschwindigkeitsparameter des Fahrzeugs,
b) Ein- und/oder Ausschalten der Steuereinheit (21),
c) Erzeugung von Steuersignalen zur Betriebsregelung des Elektromotors (2).

4. Fahrzeug nach einem oder mehr der vorhergehenden Ansprüche, **dadurch gekennzeichnet, dass** die Geschwindigkeitsparameter durch Erfassung der Betätigung der Pedale (13) erfasst werden, und die Betätigung der Pedale (13) von mindestens einem Sensor (22) erfasst wird.

5. Fahrzeug nach einem oder mehr der vorhergehenden Ansprüche, wobei Bremsorgane vorgesehen sind und wobei die Geschwindigkeitsparameter durch Erfassung der Betätigung der Bremsorgane erfasst werden, und die Betätigung der Bremsorgane von mindestens einem Sensor (23) erfasst wird.

6. Fahrzeug nach einem oder mehr der vorhergehenden Ansprüche, wobei das Leistungssignal des Elektromotors (2) eine trapezförmige Wellenform aufweist, bestehend aus einer gebrochenen Linie, die einer Sinuskurve angenähert ist.

7. Fahrzeug nach einem oder mehr der vorhergehenden Ansprüche, wobei die Energiespeicher- und Energieerzeugungsquelle aus einer wiederaufladbare Batterie (3) besteht, wobei die Batterie (3) mittels eines Lagerelementes (4) mit einem Gehäuseraum (41) für die Batterie (3) gelagert ist, der durch Seitenwände (42, 43) an seinen Seiten, durch eine Bodenwand (45) an seinen Boden und durch eine Deckwand (44) an seiner Oberseite begrenzt ist, wobei die Deckwand (44) aus einem photovoltaischen Element (441) besteht oder von diesem zumindest teilweise bedeckt ist, welches auf der Oberseite der Deckwand (44) angeordnet ist, und der Gehäuseraum (41) Anschlussschaltungen zum Verbinden der Batterie (3) mit der Steuereinheit (21) sowie Schaltungen zum Laden der Batterie (3) aufweist.

8. Fahrzeug nach Anspruch 7, wobei die Deckwand (44) mindestens ein seitliches photovoltaisches Element (442, 443) aufweist, das mit einem Umfangsrand der Deckwand (44) derart gekoppelt ist, dass das seitliche photovoltaische Element (442, 443) von einem geöffneten in einen geschlossenen Zustand bewegbar ist, in welchem geschlossenen Zustand das seitliche photovoltaische Element (442, 443) unter dem photovoltaischen Element (441) liegt.

9. Fahrzeug nach Anspruch 8, wobei die Deckwand (44) eine rechteckige Form aufweist, ein seitliches photovoltaisches Element (442, 443) mit jedem langen Umfangsrand derart verbunden ist, dass das seitliche photovoltaische Element (442, 443) von einem geöffneten in einen geschlossenen Zustand bewegbar ist, in welchem geschlossenen Zustand jedes der beiden seitlichen photovoltaischen Elemente (442, 443) sich in überlappender Beziehung zueinander befinden und unter dem photovoltaischen Element (441) liegen, wobei die beiden seitlichen photovoltaischen Elemente (442, 443) mit der Deckwand größenmäßig deckungsgleich sind.

10. Fahrzeug nach Anspruch 9, wobei die seitlichen photovoltaischen Elemente (442, 443) durch eine Translationsbewegung senkrecht zu den längeren Umfangsrändern der Deckwand (44) in den geöffneten Zustand bewegbar sind.

11. Fahrzeug nach Anspruch 9, wobei jedes der seitlichen photovoltaischen Elemente (442, 443) ein an der Deckwand (44) angelenktes Ende aufweist und durch eine Translationsbewegung senkrecht zu den längeren Umfangsrändern der Deckwand (44) in den geöffneten Zustand bewegbar ist.

12. Fahrzeug nach einem oder mehr der vorhergehenden Ansprüche, wobei mindestens ein weiterer Gehäuseraum 41' für mindestens eine weitere Batterie 3' vorgesehen ist, mindestens eine Batterie in mindestens einem Gehäuseraum zur Versorgung des Motors dient und mindestens eine weitere Batterie in mindestens einem weiteren Gehäuseraum für Nachladezwecke verwendet wird.

13. Verfahren zur Steuerung des Energiemanagements in einer motorbetriebenen Vorrichtung (2) wie einem Fahrrad oder dergleichen, in dem das Fahrrad wenigstens einen von einer Energiespeicher- und Energieerzeugungsquelle, wie z. B. eine Batterie (3) oder dergleichen, gespeisten Elektromotor (2) umfasst, wobei der mindestens eine Motor (2) mindestens eines der beiden Räder (11) antreibt, und manuelle Antriebsmittel, wie Pedale (13) oder dergleichen, die zur Übertragung einer Bewegung auf zumindest eines der beiden Räder (12) durch Übertragungsmittel vorgesehen sind, und der mindestens eine Motor (2) durch eine Steuereinheit (21) mit der Energiespeicher-und Energieerzeugungsquelle (3) verbunden ist, und die Steuereinheit (21) die Funktion des Elektromotors (2) im normalen störungsfreien Betrieb regelt, **dadurch gekennzeichnet, dass** das Verfahren folgende Schritte umfasst:
a) Erfassen der Geschwindigkeitsparameter des Fahrzeugs,
b) Ein- und/oder Ausschalten der Steuereinheit (21),
c) Erzeugung von Steuersignalen zur Betriebsregelung des Elektromotors (2),
wobei sich die Steuereinheit (21) einschaltet, wenn eine Betätigung der Pedale (13) detektiert wird.

14. Verfahren nach Anspruch 13, wobei sich die Steuereinheit (21) einschaltet, wenn ein Bremsvorgang erfasst wird.

15. Verfahren nach einem oder mehreren der vorhergehenden Ansprüche 13 bis 14, wobei die Steuereinheit unverzüglich ein- und/oder ausgeschaltet wird.

## Revendications

1. Véhicule motorisé ayant au moins deux roues (11,12), tel qu'une bicyclette ou analogue, comprenant au moins un moteur électrique (2) alimenté en courant par une source de production et de stockage d'énergie, telle qu'une batterie (3) ou analogue, ledit au moins un moteur (2) entraînant au moins l'une desdites deux roues (11),
des moyens d'entraînement manuel, tels que des pédales (13) ou analogues, étant prévus pour transférer un mouvement à au moins l'une desdites deux roues (12) par l'intermédiaire de moyens de transmission,
ledit au moins un moteur électrique (2) étant relié à ladite source de production et de stockage d'énergie (3) par l'intermédiaire d'une unité de commande (21), ladite unité de commande (21) assurant la régulation du fonctionnement dudit moteur électrique (2) pendant un fonctionnement normal exempt de défaut,
**caractérisé en ce que**
ladite unité de commande (21) est mise en service et/ou hors service en fonction des paramètres de vitesse dudit véhicule.

2. Véhicule motorisé tel que revendiqué à la revendication 1, dans lequel ladite unité de commande (21) comprend une unité de traitement de données reliée à une ou plusieurs unités de mise en mémoire et avec des moyens de traitement de données destinés à exécuter un programme logique,
l'exécution dudit programme logique impliquant l'accomplissement de certaines tâches, parmi lesquelles une mise en service et/ou hors service de ladite unité de commande.

3. Véhicule tel que revendiqué à la revendication 2, dans lequel l'exécution dudit programme logique fait effectuer à ladite unité de commande (21) les opérations consistant:
a) à détecter les paramètres de vitesse dudit véhicule,
b) à mettre en service et/ou hors service l'unité de commande (21),
c) à produire des signaux de commande servant à assurer la régulation du fonctionnement dudit moteur électrique (2).

4. Véhicule tel que revendiqué dans une ou plusieurs des revendications précédentes, **caractérisé en ce que** les paramètres de vitesse sont détectés en captant l'actionnement desdites pédales (13),
l'actionnement desdites pédales (13) étant capté par au moins un capteur (22).

5. Véhicule tel que revendiqué dans une ou plusieurs des revendications précédentes, dans lequel des organes de freinage sont prévus, et dans lequel les paramètres de vitesse sont détectés en captant l'actionnement desdits organes de freinage, l'actionnement desdits organes de freinage étant capté par au moins un capteur (23).

6. Véhicule tel que revendiqué dans une ou plusieurs des revendications précédentes, dans lequel le signal d'alimentation à destination dudit moteur électrique (2) a une forme d'onde trapézoïdale, consistant en une ligne brisée s'approchant d'une sinusoïde.

7. Véhicule tel que revendiqué dans une ou plusieurs des revendications précédentes, dans lequel ladite source de production et de stockage d'énergie consiste en une batterie rechargeable (3),
ladite batterie (3) étant soutenue par un élément de support (4) comprenant un compartiment de logement (41) destiné à ladite batterie (3), lequel est délimité par des parois latérales (42, 43) sur ses côtés, par une paroi de fond (45) à sa partie inférieure et par une paroi de couverture (44) à sa partie supérieure,
ladite paroi de couverture (44) consistant en, ou étant au moins partiellement recouverte par, un élément photovoltaïque (441), lequel est placé sur la face supérieure de ladite paroi de couverture (44),
ledit compartiment de logement (41) ayant des circuits de connexion destinés à connecter ladite batterie (3) à ladite unité de commande (21), ainsi que des circuits destinés au chargement de ladite batterie (3).

8. Véhicule tel que revendiqué à la revendication 7, dans lequel ladite paroi de couverture (44) présente au moins un élément photovoltaïque latéral (442, 443) qui est accouplé à un bord périphérique de ladite paroi de couverture (44), de façon telle que ledit élément photovoltaïque latéral (442, 443) peut être déplacé d'un état ouvert à un état fermé, état fermé dans lequel ledit élément photovoltaïque latéral (442, 443) est situé au-dessous dudit élément photovoltaïque (441).

9. Véhicule tel que revendiqué à la revendication 8, dans lequel ladite paroi de couverture (44) a une forme rectangulaire,
un élément photovoltaïque latéral (442, 443) étant accouplé à chaque bord périphérique long, de façon telle que chaque élément photovoltaïque latéral (442, 443) peut être déplacé d'un état ouvert à un état fermé, état fermé dans lequel lesdits deux éléments photovoltaïques latéraux (442, 443) sont chacun en relation de chevauchement l'un vis-à-vis de l'autre et sont chacun situés au-dessous dudit élément photovoltaïque (441),
lesdits deux éléments photovoltaïques latéraux (442, 443) s'ajustant bien en taille avec ladite paroi de couverture.

10. Véhicule tel que revendiqué à la revendication 9, dans lequel lesdits éléments photovoltaïques latéraux (442, 443) peuvent être déplacés jusqu'à l'état ouvert par un mouvement de translation perpendiculaire auxdits bords périphériques plus longs de ladite paroi de couverture (44).

11. Véhicule tel que revendiqué à la revendication 9, dans lequel chacun desdits éléments photovoltaïques latéraux (442, 443) présente une extrémité montée pivotante vis-à-vis de ladite paroi de couverture (44) et peut être déplacé jusqu'à l'état ouvert par un mouvement de rotation perpendiculaire auxdits bords périphériques plus longs de ladite paroi de couverture (44).

12. Véhicule tel que revendiqué dans une ou plusieurs des revendications précédentes, dans lequel au moins un compartiment de logement supplémentaire (41') est prévu pour au moins une batterie supplémentaire (3'), au moins une batterie située dans au moins un compartiment de logement étant utilisée pour alimenter le moteur et au moins une batterie supplémentaire située dans au moins un compartiment de logement supplémentaire étant utilisée à des fins de recharge.

13. Procédé de contrôle de la gestion d'énergie dans un dispositif entraîné par moteur (2) tel qu'une bicyclette ou analogue, ladite bicyclette comprenant au moins un moteur électrique (2) alimenté en courant par une source de production et de stockage d'énergie, telle qu'une batterie (3) ou analogue, ledit au moins un moteur (2) entraînant au moins l'une desdites deux roues (11),
des moyens d'entraînement manuel, tels que des pédales (13) ou analogues, étant prévus pour transférer un mouvement à au moins l'une desdites deux roues (12) par l'intermédiaire de moyens de transmission,
et ledit au moins un moteur électrique (2) étant relié à ladite source de production et de stockage d'énergie (3) par l'intermédiaire d'une unité de commande (21), ladite unité de commande (21) assurant la régulation du fonctionnement dudit moteur électrique (2) pendant un fonctionnement normal exempt de défaut,
**caractérisé en ce que** ledit procédé comprend les opérations consistant:
a) à détecter les paramètres de vitesse dudit véhicule,
b) à mettre en service et/ou hors service l'unité de commande (21),
c) à produire des signaux de commande servant à assurer la régulation du fonctionnement dudit moteur électrique (2),
et dans lequel ladite unité de commande (21) est mise en service si un actionnement desdites pédales (13) est détecté.

14. Procédé tel que revendiqué à la revendication 13, selon lequel ladite unité de commande (21) est mise en service si une action de freinage est captée.

15. Procédé tel que revendiqué dans une ou plusieurs des revendications précédentes 13 et 14, selon lequel ladite unité de commande est mise en service et/ou hors service d'une manière instantanée.
